# EUROPÄISCHE PATENTANMELDUNG

(11) **EP 0 810 324 A1**
(43) Veröffentlichungstag der Anmeldung: **03.12.1997**
(21) Anmeldenummer: 97103374.1
(22) Anmeldetag: 28.02.1997
(51) Int. Cl.: E01C 19/48, B62D 33/06

(54) **Strassenfertiger mit Schutzdach**

(30) Priorität: 31.05.1996 DE 29609704 U
(71) Anmelder: Joseph Vögele AG, D-68146 Mannheim (DE)
(72) Erfinder: Schmidt, Bernhard, Dipl.-Ing., 68804 Altlussheim (DE)
(74) Vertreter: Grünecker, Kinkeldey, Stockmair & Schwanhäusser Anwaltssozietät

(57) **Zusammenfassung**

Ein Straßenfertiger (F) mit einem fahrbaren Chassis (1), das einen Gutbunker (3), eine längsverlaufende Förderstrecke (4), eine Querverteileinrichtung (5) und Anschlußeinrichtungen (6) für ein geschlepptes Arbeitsgerät (8) aufweist, und in dem eine Primärantriebsquelle (9) und ein Führerstand (T) mit einem Bedienpult (18) vorgesehen sind, oberhalb dessen sich ein Schutzdach (D) befindet, das mit beidseitigen Stützen (S) am Chassis festgelegt ist, wird das Schutzdach (D) von einer einzigen Stütze (S) an jeder Chassisseite getragen.

## Beschreibung

Die Erfindung betrifft einen Straßenfertiger der im Oberbegriff des Patentanspruchs 1 angegebenen Art.

Fahrbare Straßenfertiger sind häufig mit einem Schutzdach für den Fertigerführer versehen, um diesen gegen Witterungseinflüsse und Schmutz zu schützen. Gemäß Prospekt "Super 1800" Nr. 2374/6/3.92 der Fa. Joseph Vögele AG, D-68146 Mannheim, und DE-U-295 08 396 wird das aus einem Gitterrahmen mit darüber gezogener Plane bestehende Schutzdach von vier vertikalen Rohrstützen getragen, die unten am Chassis festgelegt sind. In den Rohrstützen sind Gelenke vorgesehen, um das Schutzdach aus einer angehobenen Arbeitsposition in eine abgesenkte Transportposition bewegen zu können, damit der Straßenfertiger beim Transport auf einem Transportfahrzeug die zulässige Transporthöhe einhält. Das Bedienpult ist auf der Führerstandsplattform vor wenigstens einem Fahrersitz angeordnet. Die bekannte Konstruktion ist aufwendig und deshalb teuer herzustellen. Die Montage und die Handhabung beim Anheben bzw. Absenken des Schutzdaches sind mühsam und zeitaufwendig. Außerdem behindern die hinteren Stützen des Schutzdaches den Bewegungsbereich auf der Führerstandsplattform.

Bei einem aus CH-B-36 02 339 bekannten Traktor-Leichtverdeck sind an beiden Seiten der Motorabdeckung Vertikal-Steckführungen für sich nach oben erstreckende Haltesäulen angebracht. Die Haltesäulen besitzen an ihren oberen Enden Lageraugen mit Klemmschrauben, in die ein Querholm eines Viereckrahmens eingreift, der mit annähernd horizontal nach hinten ragenden Auslegern endet.

Die DE-C-951 333 betrifft ein Allwetterverdeck für Ackerschlepper, das aus vorderen, beidseitig am Motorblock befestigten Steckfassungen, einem mit den unteren Enden in den Steckfassungen verankerten Querrahmen und einem herausnehmbar im Querrahmen oben eingesetzten Schutzdach besteht.

Ein fahrbarer Deckenfertiger gemäß DE-U 92 06 935 weist eine geschlossene Fahrerkabine auf, die sich auf einer Plattform des Chassis verfahren und für Transportzwecke umlegen läßt.

Der Erfindung liegt die Aufgabe zugrunde, einen Straßenfertiger der eingangs genannten Art mit einem einfachen, kostengünstig herstellbaren und bequem zu montierenden Schutzdach auszustatten.

Die gestellte Aufgabe wird erfindungsgemäß mit den Merkmalen des Patentanspruchs 1 gelöst.

Da das Schutzdach nur mit zwei Stützen am Chassis gehaltert ist, werden die bisher erforderlichen weiteren Stützen eingespart. Dies vereinfacht die Herstellung und ermöglicht eine rasche Montage. Zusätzlich ergibt sich ein besserer Zugang zum Führerstand.

Gemäß Anspruch 2 befinden sich die beiden Stützen vor dem Fahrersitz, wo sie die Sichtverhältnisse zur Seite und nach hinten nicht beeinträchtigen.

Stabil ist das Schutzdach gemäß Anspruch 3. Das Schutzdach kann mit den Stützen als Baueinheit vorgefertigt werden.

Gemäß Anspruch 4 wird hohe Formstabilität erreicht, was für die relativ rauhen Arbeitsbedingungen auf und mit einem Straßenfertiger wichtig ist.

Gemäß Anspruch 5 braucht das Schutzdach mit den Stützen für den Transport des Straßenfertigers nicht abmontiert, sondern nur verschwenkt zu werden. Je nach Bauweise des Straßenfertigers können die Stützen mit dem Schutzdach in Fahrtrichtung und/oder gegen die Fahrtrichtung, d.h. nach vorne oder nach hinten, in die Transportposition verschwenkt werden.

Eine niedrige Transporthöhe sowie stabile Lagen in den Transport- und Arbeitspositionen werden gemäß Anspruch 6 erreicht.

Die Konstruktion der Stützen mit dem Schutzdach zeigt gemäß Anspruch 7 ein ansprechendes Äußeres. Durch die Schräglage der Stützen wird, sofern die Stützen nach hinten die Transportposition verschwenkbar sind in der Transportposition, eine optimal niedrige Transporthöhe erreicht.

Die Handhabung des Schutzdaches beim Verschwenken zwischen den Arbeits- und Transportpositionen ist gemäß Anspruch 8 bequem.

Gemäß Anspruch 9 dienen unterstützende Gasfedern zum Gewichtsausgleich und gegebenenfalls zum Dämpfen der Verschwenkbewegung.

Gemäß Anspruch 10 läßt sich das Schutzdach mittels der hydraulischen Arbeitszylinder bequem und ferngesteuert verschwenken. Zweckmäßig ist die Betätigungseinrichtung von außen und unten am Straßenfertiger zugänglich, damit zum Verschwenken des Schutzdaches nicht auf den Führerstand geklettert zu werden braucht.

Die Stabilität des Querrahmens ermöglicht gemäß Anspruch 11 wenigstens eine Frontscheibe anzubringen, bzw. den Frontbereich weitgehend zu verkleiden, um den Komfort und den Schutz für den Fertigerführer zu erhöhen.

Gemäß Anspruch 12 ist auch das Bedienpult in den Querrahmen integriert bzw. an den Stützen gelagert. Dadurch entfällt eine eigenständige Anbringung des Bedienpults auf dem Führerstand. Auch wird das Bedienpult zusammen mit dem Schutzdach in die Arbeitsposition oder in die Transportposition gebracht. Dies steigert den Bedienungskomfort erheblich, da das Bedienpult an den Stützen eine optimale Position hat und zum Transport nicht abgebaut und gesondert verstaut zu werden braucht.

Gemäß Anspruch 13 schützt das Schutzdach hauptsächlich den Bereich des Führerstandes.

Gemäß Anspruch 14 wird durch das Schutzdach auch der hinter dem Straßenfertiger liegende Bereich oberhalb des Arbeitsgerätes abgedeckt, auf dem sich weiteres Bedienungspersonal bei extremen Witterungsverhältnissen unterstellen kann.

Alternativ kann gemäß Anspruch 15 die Verlängerung des Schutzdaches wahlweise angebracht oder abmontiert werden.

Hohe Gestaltfestigkeit wird zumindest für die Stützen, vorzugsweise auch für das Schutzdach selbst, gemäß Anspruch 16 erreicht. Außerdem ist dies eine einfach herstellbare, kostengünstige und stabile Konstruktion.

Gemäß Anspruch 17 wird für die Schwenkverstellung der Stützen und des Schutzdaches gegebenenfalls im tieferliegenden Seitenbereich des Chassis nutzbarer Raum verwendet. Es ergeben sich günstige Hebelverhältnisse für die Abstützung des Schutzdaches und bei der Verschwenkung. Außerdem entfallen oberhalb des Chassis freiliegende, gegebenenfalls störende Baugruppen.

Anhand der Zeichnung werden Ausführungsformen des Erfindungsgegenstandes erläutert. Es zeigen:
- Fig. 1: eine schematische Seitenansicht eines Straßenfertigers,
- Fig. 2: eine zugehörige Frontansicht,
- Fig. 3: eine Seitenansicht in einer anderen Betriebsposition, und
- Fig. 4: eine Seitenansicht einer alternativen Ausführungsform.

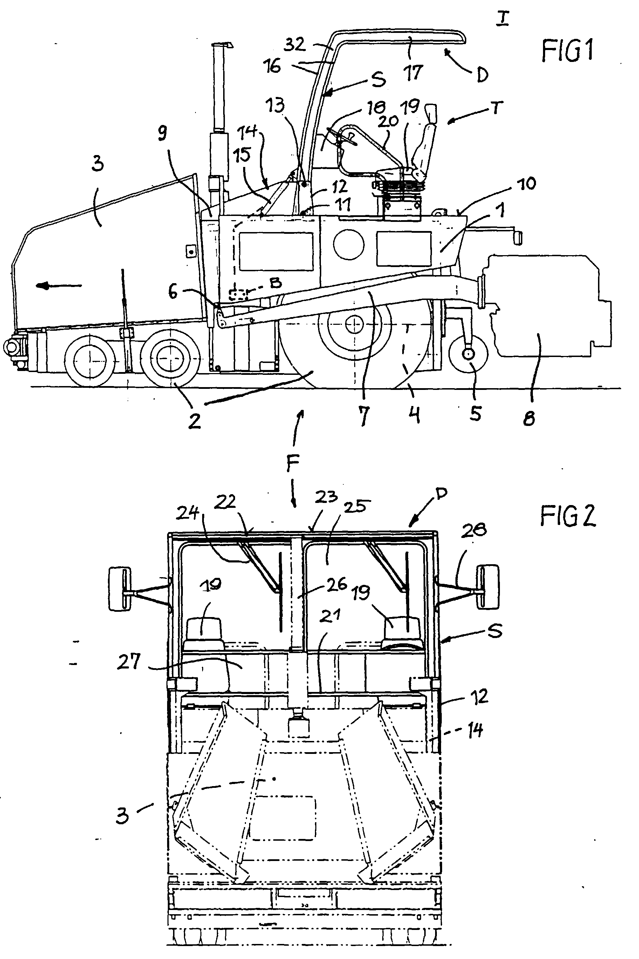

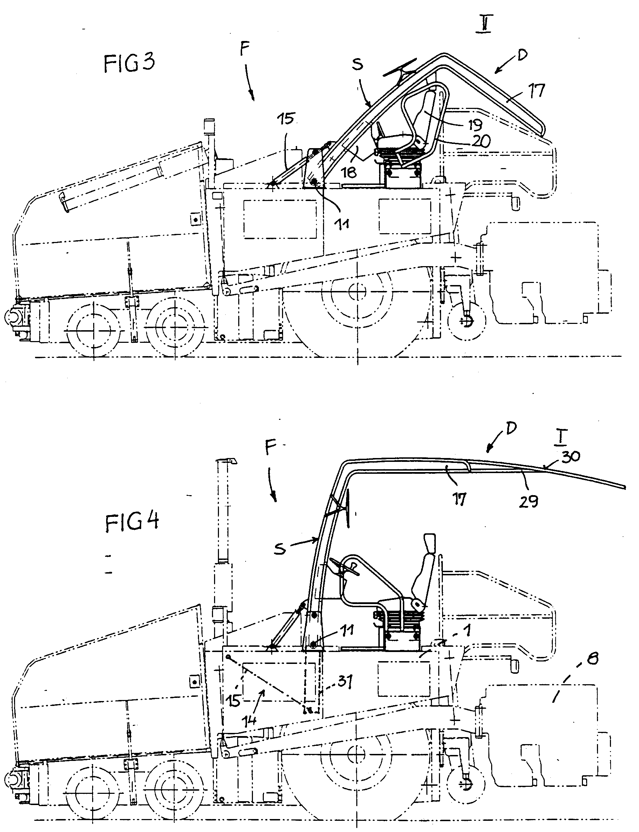

Ein selbstfahrender Straßenfertiger F (Fig. 1 und 2) weist an einem Chassis 1 ein Fahrwerk 2 (Reifenfahrwerk oder Kettenfahrwerk), einen vorneliegenden Gutbunker 3, eine im Chassis 1 längsverlaufende Fördervorrichtung 4 und eine im hinteren Endbereich des Chassis angeordnete Querverteilvorrichtung 5 (Verteilerschnecke) auf. Am Chassis 1 sind ferner Anschlußeinrichtungen 6 vorgesehen, an denen seitliche Ausleger 7 angelenkt sind, die ein hinter dem Chassis 1 geschlepptes Arbeitsgerät 8, z.B. eine Einbaubbohle, ankoppeln. Im Chassis 1 ist eine Primärantriebsquelle 9 untergebracht, die zum Teil über eine Führerstandsplattform 10 eines Führerstandes T übersteht.

Oberhalb des Führerstandes T ist ein mit nur zwei Stützen S, d.h., je eine Stütze S pro Fertigerseite, am Chassis 1 abgestütztes Schutzdach D abnehmbar bzw. umlegbar angeordnet. Die Stützen S befinden sich in Arbeitsfahrtrichtung (Pfeil innerhalb des Gutbunkers 3) vor wenigstens einem auf der Plattform 10 angeordneten Fahrersitz 19, an dem wenigstens ein Schutz- oder Haltebügel 20 angeordnet sein kann. Jede Stütze S ist beispielsweise aus zwei Profilrohren 16 mit einem diese verbindenen Stegblech 32 gebildet, ist nach oben und rückwärts (entgegen der Arbeitsfahrtrichtung) bogenförmig gekrümmt, und trägt zweckmäßigerweise wenigstens einen Längsträger 17 gleicher Bauweise des Schutzdaches D, der sich oben an der Stütze S frei auskragend nach hinten erstreckt. Auf- oder an den Längsträgern 17 ist eine Schutzdach-Abdeckung 23 (Plane, Blech oder Kunststoff), gegebenenfalls abnehmbar, angebracht.

Die Stützen S sind um eine gemeinsame Querachse 11 verschwenkbar, die sich in etwa auf der Höhe der Plattform 10 befindet. Seitliche Lagerböcke 12 überlappen sich in der in Fig. 1 gezeigten Arbeitsposition I des Schutzdaches D mit unteren Endbereichen der Stützen S, um diese zu stabilisieren und abzustützen, wobei mechanische Verriegelungen 13 die Kipplast des Schutzdaches D aufnehmen. Ferner ist ein Schwenkverstellantrieb 14 vorgesehen, der entweder gewichtsentlastende Federn oder Gasfedern 15 enthält, die vor der Querachse 11 am Chassis 10 abgestützt sind, oder hydraulische Arbeitszylinder 15, die zweckmäßigerweise mit einer von außen und unten am Straßenfertiger F bedienbaren Betätigungseinrichtung B verbunden sind. Mittels der Hydraulikzylinder 15 läßt sich das Schutzdach D in die in Fig. 3 gezeigten Transportposition II nach hinten verschwenken, und wieder in die in Fig. 1 gezeigte Arbeitsposition I zurückverstellen. Zwischen den beiden Stützen S erstrecken sich verbindende Querträger 21, 22, so daß ein formstabiler Querrahmen gebildet wird. An diesem Querrahmen oder an den Stützen ist dem Fahrersitz 19 zugewandt ein Bedienpult 18 angebracht, das zusammen mit den Stützen S verschwenkbar ist. Im Querrahmen können nicht nur Verkleidungen 27 angebracht sein, sondern auch Frontscheiben 25, Scheibenwischer 24 und an den Stützen S befestigte Rückspiegel 28.

In Fig. 1 und 2 erstreckt sich das Schutzdach D nach hinten bis etwa über das hintere Ende des Chassis 1. Nach Lösen der Verriegelung 13 läßt sich das Schutzdach D in die in Fig. 3 gezeigte Transportposition II verschwenken, um die Transporthöhe des Straßenfertigers, z.B. für einen Transport auf einem Tieflader, zu reduzieren. Der Schwenkweg der Stützen S ist zweckmäßigerweise begrenzt, so daß in der Transportposition II das Bedienpult 18 vor den Fahrersitz 19 eintaucht und die Beuge zwischen den Stützen S und dem Schutzdach D bei oder an der Kopfstütze des Fahrersitzes 19 liegt. Das hintere Ende des Schutzdaches D greift dann nach hinten über das hintere Ende des Chassis 1. Die Schutz- oder Haltebügel 20 sind zweckmäßigerweise verschwenkbar, um den Schwenkhub der Stützen S nicht zu behindern. Die Rückspiegel 28 können nach außen bzw. vorne geschwenkt sein.

In Fig. 4 sind die Längsträger 17 des Schutzdaches D nach hinten verlängert (Verlängerungsteile 29) und mit einem Schutzdachabschnitt 30 versehen, so daß auch der hinter dem Chassis 1 liegende Bereich des Arbeitsgerätes 8 in der Arbeitsposition I überdeckt wird. Gegebenenfalls sind die Verlängerungsteile 29 an die Längsträger 17 abnehmbar angefügt, um das Schutzdach an die jeweiligen Anforderungen anpassen zu können.

In Fig. 4 greifen die unteren Enden der Stützen S mit Verlängerungen 31 in Seitenbereiche des Chassis 1. In diesen tiefliegenden Bereichen sind die Schwenkverstelleinrichtungen 14, z.B. Hydraulikzylinder 15, untergebracht. Es ergeben sich hierdurch günstige Hebelverhältnisse. Gegebenenfalls ist die Querachse 11 tiefergelegt, um die Transporthöhe noch weiter verringern zu können. Das Abgasrohr der Primärantriebsquelle 9 kann für Transportzwecke ebenfalls entweder umgeklappt oder abgenommen werden.

## Patentansprüche

1. Straßenfertiger (F), mit einem fahrbaren Chassis (1), das vorne wenigstens einen Gutbunker (3), eine längsverlaufende Förderstrecke (4), hinten eine Querverteileinrichtung (5) und seitlich Anschlußeinrichtungen (6) für ein geschlepptes Arbeitsgerät (8) aufweist, und in dem eine Primärantriebsquelle (9) und ein ein Bedienpult (18) aufweisender Führerstand (T) vorgesehen sind, oberhalb dessen sich ein Schutzdach (D) befindet, welches mit beiderseitigen Stützen (S), gegebenenfalls absenkbar, am Chassis (1) festgelegt ist, **dadurch gekennzeichnet,** daß das Schutzdach (D) von einer einzigen Stütze (S) an jeder Chassisseite getragen ist.

2. Straßenfertiger nach Anspruch 1, **dadurch gekennzeichnet,** daß die beiden Stützen (S)- quer zur Längsrichtung - aufeinander ausgerichtet und in Arbeitsfahrtrichtung vor wenigstens einem Fahrersitz (19) angeordnet sind.

3. Straßenfertiger nach Anspruch 1, **dadurch gekennzeichnet,** daß jede Stütze (S) starr, vorzugsweise einstückig, mit einem nach hinten frei auskragenden Längsträger (17) des Schutzdaches (D) verbunden ist.

4. Straßenfertiger nach Anspruch 1, **dadurch gekennzeichnet,** daß die beiden Stützen (S) mit wenistens einem verbindenden Querträger (21, 22) einen formstabilen Querrahmen bilden.

5. Straßenfertiger nach Anspruch 1, **dadurch gekennzeichnet,** daß die beiden Stützen (S) um eine gemeinsame Querachse (11) zwischen einer Arbeitsposition (I) und einer Transportposition (II) verschwenkbar abgestützt sind.

6. Straßenfertiger nach Anspruch 5, **dadurch gekennzeichnet,** daß die Querachse (11) in etwa auf der Höhe einer Führerstandsplattform (10) des Chassis (1) in je einem Lagerbock (12) angeordnet ist, der in der Arbeitsposition (I) einen unteren Endabschnitt der Stütze (S) überlappt und im Abstand von der Querachse (11) eine Stützenverriegelung (13) enthält.

7. Straßenfertiger nach Anspruch 1, **dadurch gekennzeichnet,** daß jede Stütze (S) in der Arbeitsposition (I) entgegen der Arbeitsfahrtrichtung schräg geneigt ist, vorzugsweise mit einer bogenförmigen Krümmung, deren konkave Krümmungsseite zum Fahrersitz (19) weist.

8. Straßenfertiger nach den Ansprüchen 1 und 5, **dadurch gekennzeichnet,** daß, gegebenenfalls zusätzlich zu einer mechanischen Verriegelung (13) in wenigstens einer Position (I, II), ein mechanischer oder hydraulischer Schwenkverstellantrieb (14) für die Stützen (S) vorgesehen ist.

9. Straßenfertiger nach Anspruch 8, **dadurch gekennzeichnet,** daß der mechanische Schwenkverstellantrieb (14) unterstützende Gasfedern (15) aufweist.

10. Straßenfertiger nach Anspruch 8, **dadurch gekennzeichnet,** daß der hydraulische Schwenkverstellantrieb (14) wenigstens einen hydraulischen Arbeitszylinder (15) aufweist, der, vorzugsweise, mit einer von außen unten am Fertiger (F) zugänglichen Betätigungseinrichtung (B) verbunden ist.

11. Straßenfertiger nach Anspruch 4, **dadurch gekennzeichnet,** daß in den Querrahmen wenigstens eine Frontscheibe (25) eingegliedert ist.

12. Straßenfertiger nach Anspruch 1, **dadurch gekennzeichnet,** daß das Bedienpult (18) im Querrahmen bzw. an den Stützen (S) angeordnet ist.

13. Straßenfertiger nach Anspruch 3, **dadurch gekennzeichnet,** daß sich die Längsträger (17) des Schutzdaches (D) bis hinter den Fahrersitz (19) erstrecken.

14. Straßenfertiger nach Anspruch 13, **dadurch gekennzeichnet,** daß sich die Längsträger (17) mit Verlängerungsteilen (29) entgegen der Arbeitsfahrtrichtung bis über das hintere Chassisende und über den Arbeitsbereich des geschleppten Arbeitsgeräts (8), vorzugsweise einer Einbaubohle, erstrecken.

15. Straßenfertiger nach Anspruch 3, **dadurch gekennzeichnet,** daß hinten an den Längsträgern (17) des Schutzdaches abnehmbare Schutzdachverlängerungsträger (29) angeordnet sind, die sich über das hintere Chassisende und über den Arbeitsbereich des geschleppten Arbeitsgerätes (8), vorzugsweise einer Einbaubohle, erstrecken.

16. Straßenfertiger nach Anspruch 1, **dadurch gekennzeichnet,** daß jede Stütze (S), vorzugsweise auch die äußeren Längsträger (17) des Schutzdaches (D), aus zwei annähernd in Längsrichtung des Straßenfertigers beabstandeten Profilrohren (16) bestehen, die durch ein Stegblech (32) miteinander verbunden sind.

17. Straßenfertiger nach Anspruch 5, **dadurch gekennzeichnet,** daß jede Stütze (S) über die Schwenkachse (11) hinaus nach unten verlängert ist, und daß der Schwenkverstellantrieb (14) unterhalb der Ebene der Plattform (10) angeordnet ist und an der Verlängerung (31) der Stütze (S) angreift.
